# FASCICULE DE BREVET EUROPEEN

(11) **EP 2 670 616 B1**
(45) Date de publication et mention de la délivrance du brevet: **12.08.2015**
(21) Numéro de dépôt: 12700594.0
(22) Date de dépôt: 04.01.2012
(51) Int. Cl.: B60K 37/02

(54) **TABLEAU DE BORD**
INSTRUMENTENTAFEL
INSTRUMENT PANEL

(30) Priorité: 31.01.2011 FR 1100286
(43) Date de publication de la demande: 11.12.2013
(73) Titulaire: Johnson Controls Technology Company, Holland, MI 49423 (US)
(72) Inventeur: BOX, Benoit, F-95290 L'isle Adam (FR)
(74) Mandataire: Wolff, Felix
(86) Numéro de dépôt international: PCT/EP2012/000020
(87) Numéro de publication internationale: WO 2012/104003

(56) Documents cités:
- EP-A1- 0 600 152
- US-A1- 2003 015 364

## Description

La présente invention concerne d'une part un tableau de bord, notamment pour un véhicule automobile.

Plus précisément, la présente invention concerne les moyens de protection d'organes ou d'éléments électriques fixés sur une carte imprimée d'un tableau de bord, comme des moteurs rotatifs, tels que les moteurs pas à pas, les loudspeaker ou buzzer, les connecteurs, les serrages métalliques.

De nombreux moyens ont déjà été proposés, notamment à base de vis ou soudure, pour assurer le support des éléments électriques et pour protéger les éléments électriques tels que les moteurs électriques, les loudspeaker, les buzzer, les connecteurs, les serrages métalliques, etc dans des tableaux de bord de véhicules automobiles.

De manière connue, une protection d'arrière est prévue qui couvre la quasi-totalité de la largeur du tableau de bord. Une telle protection ou un tel couvercle rend le tableau de bord plus lourd et plus couteux.

Un tableau de bord comprenant les caractéristiques du préambule des revendications 1 et 7 est connu du document EP 0 600 152 A1.

La présente invention a notamment pour but de pallier aux inconvénients de l'art connu, et notamment ceux cités ci-dessus, et a également pour but de proposer un tableau de bord de façon à rendre le tableau de bord plus léger en poids, moins couteux dans la fabrication et plus simple dans l'assemblage.

Suivant l'invention, ce but est atteint par un tableau de bord pour véhicules automobiles, comprenant une carte imprimée et au moins un élément électrique, l'élément électrique étant fixé sur la carte imprimée, le tableau de bord comprenant par ailleurs une boîte à lumière et un élément protecteur apte à protéger l'élément électrique, caractérisé en ce que l'élément protecteur et la boîte à lumière sont prévus de manière d'être formés en une seule pièce.

De par une telle réalisation du tableau de bord, il est avantageusement possible de réaliser la boîte à lumière et l'élément protecteur à travers une seule opération de fabrication, notamment à travers un moulage par injection d'une matière plastique.

Une telle fabrication de la boîte à lumière et de l'élément protecteur ouvre la possibilité de supprimer la nécessité de prévoir un couvercle ou d'un boîtier par l'arrière du tableau de bord. Ainsi une construction simple et léger du tableau de bord est possible tout en protégeant les éléments électriques montés sur la carte imprimée du tableau de bord.

Des perfectionnements préférés de l'invention résident dans le fait:
-- qu'entre l'élément protecteur et la boîte à lumière est prévu un élément à charnière, et/ou
-- qu'entre l'élément protecteur et la boîte à lumière est prévu un élément de liaison oblongue et flexible, et/ou
-- qu'entre l'élément protecteur et la boîte à lumière est prévu un point de rupture prédéterminé.

De par de telles réalisations du tableau de bord inventif, il est avantageusement possible de prévoir l'élément protecteur ou une pluralité d'éléments protecteurs à différents endroits sur la carte imprimée. Par exemple, il est possible de plier l'élément protecteur à l'endroit de l'élément à charnière. A travers l'élément de liaison oblongue et flexible, il est possible de positionner l'élément protecteur à un endroit de la carte imprimée qui est différent de l'endroit où l'élément protecteur est relié à la boîte à lumière. Les cas de l'élément à charnière et de l'élément de liaison oblongue et flexible ont l'avantage que l'élément protecteur n'est pas dissocié de la boîte à lumière lors de l'assemblage du tableau de bord, et ainsi l'élément protecteur ne peut pas se perdre lors de l'opération d'assemblage. Lorsqu'un point de rupture prédéterminé est prévu entre l'élément protecteur et la boîte à lumière, il est possible selon la présente invention, de dissocier complètement l'élément protecteur et le placer librement pour protéger l'élément électrique, notamment un élément moteur commen un moteur pas à pas, un loudspeaker, un buzzer, un connecteur, un serrage métallique, etc.

Selon un mode de réalisation préféré du tableau de bord selon la présente invention, l'élément protecteur est adapté pour être fixé par clipsage sur la carte imprimée.

De par une telle réalisation du tableau de bord, il est avantageusement possible de réaliser un assemblage simple et efficace des composants du tableau de bord.

Selon un mode de réalisation préféré du tableau de bord selon la présente invention, l'élément électrique est
-- un élément moteur, notamment un moteur pas à pas, et/ou
-- un loudspeaker, et/ou
-- un buzzer, et/ou
-- un connecteur, et/ou
-- un serrage métallique.

Selon encore un mode de réalisation préféré du tableau de bord selon la présente invention, l'élément protecteur contourne l'élément électrique de façon à protéger l'élément électrique.

Un autre perfectionnement préféré de l'invention résident dans le fait que le tableau de bord comprend une surface d'affichage d'un côté de la carte imprimée et que l'élément électrique est fixé sur la carte imprimée de l'autre côté de la carte imprimée.

De par une telle réalisation, il est possible selon la présente invention de prévoir un montage de l'élément électrique par l'arrière (de la carte imprimée), de pouvoir protéger l'élément électrique, notamment contre les décharges électrostatiques, et en même temps de supprimer le couvercle par arrière du tableau de bord.

Un autre objet de la présente invention concerne un méthode de fabrication d'un tableau de bord pour véhicules automobiles, le tableau de bord comprenant une carte imprimée et au moins un élément électrique, l'élément électrique étant fixé sur la carte imprimée, le tableau de bord comprenant par ailleurs une boîte à lumière et un élément protecteur apte à protéger l'élément électrique, caractérisé en ce que pendant une première étape, l'élément protecteur et la boîte à lumière sont formés en une seule pièce, et que pendant une deuxième étape, l'élément protecteur est fixé sur la carte imprimée.

De par une telle réalisation de la fabrication du tableau de bord, il est avantageusement possible de protéger les éléments électriques montés sur la carte imprimée sans la nécessité de prévoir un couvercle ou un boîtier par l'arrière du tableau de bord.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique sur un tableau de bord selon la présente invention,
la figure 2 est une vue schématique d'arrière sur une carte imprimée d'un tableau de bord selon la présente invention,
la figure 3 est une vue schématique sur une boîte à lumière selon un premier mode de réalisation du tableau de bord selon la présente invention,
la figure 4 est une vue schématique sur une boîte à lumière selon un deuxième mode de réalisation du tableau de bord selon la présente invention,
la figure 5 est une vue schématique d'arrière sur une carte imprimée selon le deuxième mode de réalisation du tableau de bord selon la présente invention, et
la figure 6 est une vue schématique d'arrière sur une carte imprimée selon le premier mode de réalisation du tableau de bord selon la présente invention.

### DESCRIPTION DES DESSINS

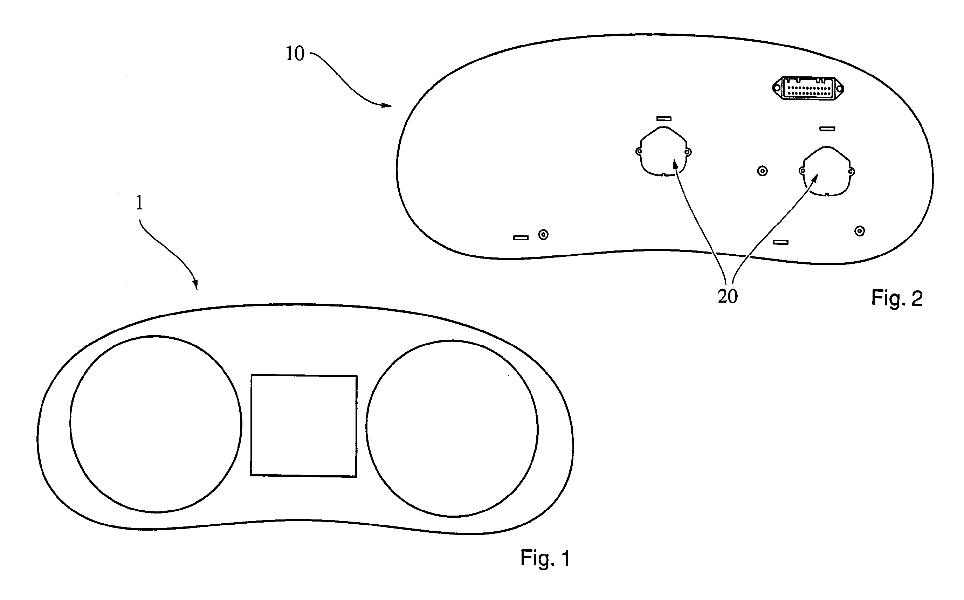

La figure 1 des dessins annexés montre une vue schématique sur un tableau de bord 1 selon la présente invention. Normalement, un tableau de bord 1 comprend au moins une surface d'affichage pour afficher des informations utiles pour le conducteur du véhicule. Différents surfaces d'affichage sont schématiquement indiquées dans la figure 1 par des cercles et par un carré dans le tableau de bord 1.

La figure 2 des dessins annexés montre une vue schématique d'arrière sur une carte imprimée 10 d'un tableau de bord 1 selon la présente invention. Il est visible que des éléments électriques 20 sont montés sur la carte imprimée 10. Les éléments électriques 20 sont notamment montés par la face arrière de la carte imprimée 20 (c'est à dire par le côté de la carte imprimée 20 qui est opposé à la surface d'affichage.

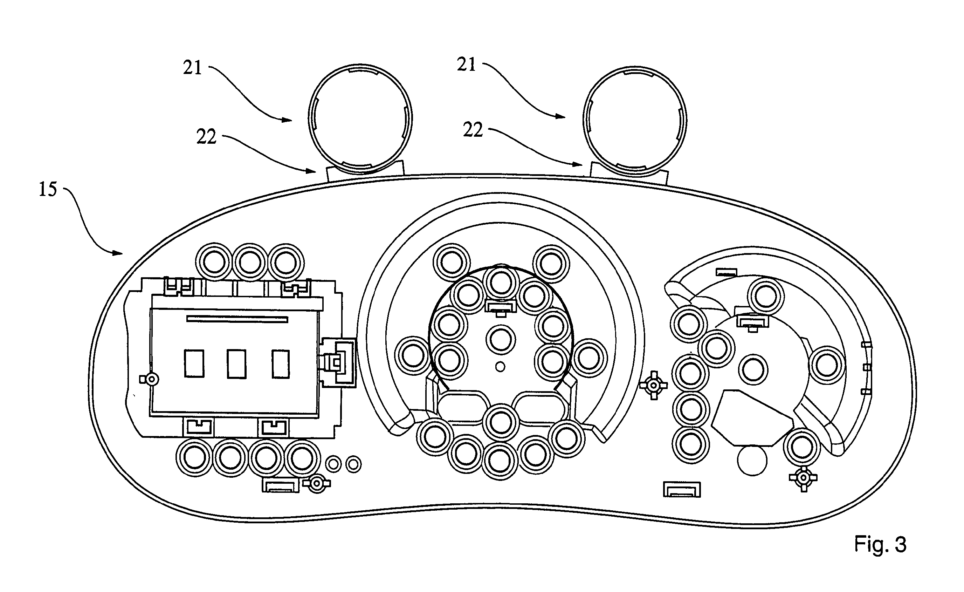

La figure 3 des dessins annexés montre une vue schématique sur une boîte à lumière 15 selon un premier mode de réalisation du tableau de bord 1 selon la présente invention. La boîte à lumière 15 comprend deux éléments protecteurs 21. Chacun des éléments protecteurs est formé avec la boîte à lumière 15 de manière à former une seule pièce. Dans le premier mode de réalisation, les éléments protecteurs 21 sont reliés à la boîte à lumière à travers un élément à charnière 22.

Par l'intermédiaire de l'élément à charnière, il est possible de plier l'élément protecteur en arrière de manière à couvrir l'élément électrique.

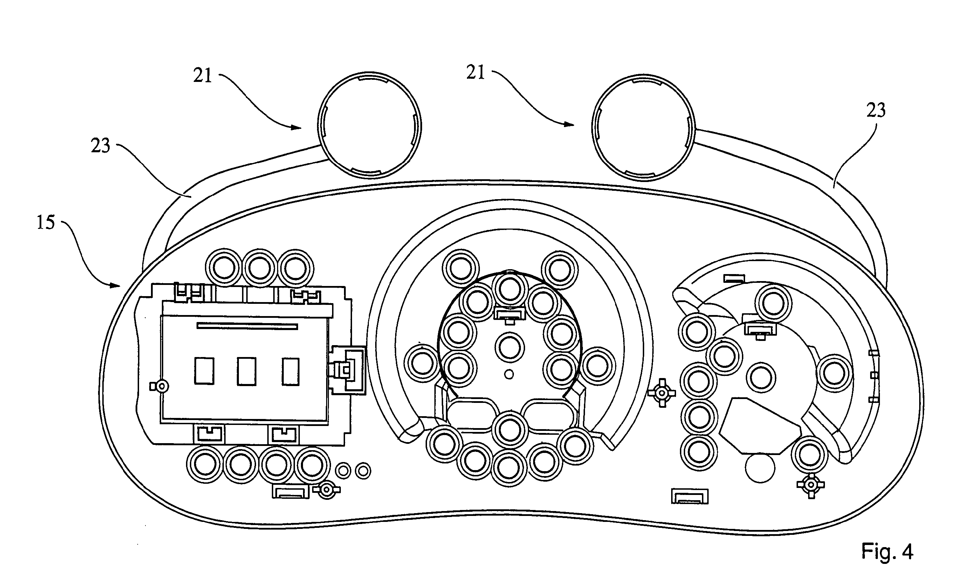

La figure 4 des dessins annexés montre une vue schématique sur une boîte à lumière 15 selon un deuxième mode de réalisation du tableau de bord 1 selon la présente invention. La boîte à lumière 15 comprend de nouveau deux éléments protecteurs 21. Chacun des éléments protecteurs est formé avec la boîte à lumière 15 de manière à former une seule pièce. Dans le deuxième mode de réalisation, les éléments protecteurs 21 sont reliés à la boîte à lumière à travers un élément de liaison oblongue et flexible 23. Par l'intermédiaire de l'élément de liaison oblongue et flexible 23, il est possible de positionner l'élément protecteur de manière flexible pour couvrir l'élément électrique.

Il est possible selon la présente invention que une boîte à lumière 15 comprend un premier élément protecteur 21 qui est relié à la boîte à lumière 15 à travers un élément à charnière, et un deuxième élément protecteur 21 qui est relié à la boîte à lumière 15 à travers un élément de liaison oblongue et flexible 23.

Il est également possible que soit l'élément à charnière 22, soit l'élément de liaison oblongue et flexible 23 est prévu comprenant un point de rupture prédéterminé de façon à pouvoir détacher facilement l'élément protecteur 21 de la boîte à lumière 15.

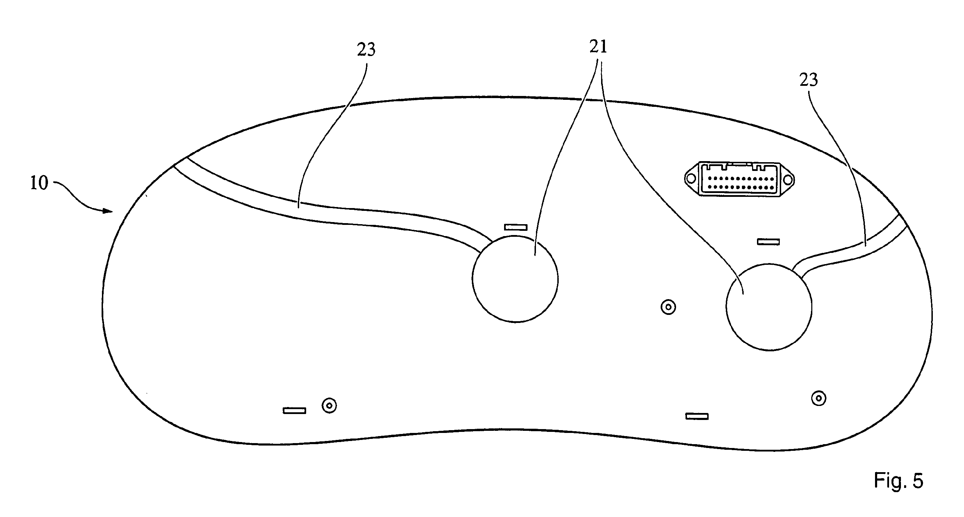

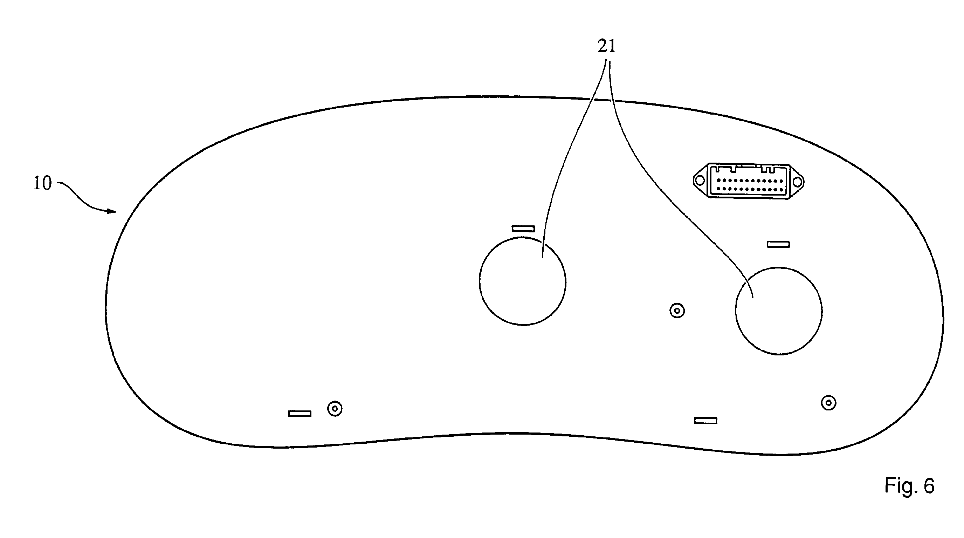

Les figures 5 et 6 sont des vues schématiques d'arrière sur une carte imprimée selon le deuxième mode de réalisation du tableau de bord 1, et selon le deuxième mode de réalisation du tableau de bord 1. Les éléments protecteurs 21 sont positionnés sur la carte imprimée 10 pour protéger les éléments électriques 20. Dans le cas de la figure 5, les éléments protecteurs 21 sont positionnés à l'aide des éléments de liaison oblongue et flexible 23. Dans le cas de la figure 6, les éléments protecteurs 21 sont détachés de la boîte à lumière 15 et positionnés librement pour protéger les éléments électriques 20.

### Liste des signes de référence

- 1: tableau de bord
- 10: carte imprimée
- 15: boîte à lumière
- 20: élément électrique
- 21: élément protecteur
- 22: élément à charnière
- 23: élément de liaison oblongue et flexible

## Revendications

1. Tableau de bord (1) pour véhicules automobiles, comprenant une carte imprimée (10) et au moins un élément électrique (20), l'élément électrique (20) étant fixé sur la carte imprimée (10), le tableau de bord (1) comprenant par ailleurs une boîte à lumière (15) et un élément protecteur (21) apte à protéger l'élément électrique (20), l'élément protecteur (21) et la boîte à lumière (15) étant prévus de manière d'être formés en une seule pièce, **caractérisée en ce qu'**entre l'élément protecteur (21) et la boîte à lumière (15) est prévu un élément de liaison oblongue et flexible (23).

2. Tableau de bord (1) selon la revendication 1, **caractérisé en ce qu'**entre l'élément protecteur (21) et la boîte à lumière (15) est prévu un point de rupture prédéterminé.

3. Tableau de bord (1) selon l'une quelconque des revendications précédentes, **caractérisé en ce que** l'élément protecteur (21) est adapté pour être fixé par clipsage sur la carte imprimée (10).

4. Tableau de bord (1) selon l'une quelconque des revendications précédentes, **caractérisé en ce que** l'élément électrique (20) est
-- un élément moteur, notamment un moteur pas à pas, et/ou
-- un loudspeaker, et/ou
-- un buzzer et/ou
-- un connecteur, et/ou
-- un serrage métallique.

5. Tableau de bord (1) selon l'une quelconque des revendications précédentes, **caractérisé en ce que** l'élément protecteur (21) contourne l'élément électrique (20).

6. Tableau de bord (1) selon l'une quelconque des revendications précédentes, **caractérisé en ce que** le tableau de bord (1) comprend une surface d'affichage d'un côté de la carte imprimée (10) et que l'élément électrique (20) est fixé sur la carte imprimée (10) de l'autre côté de la carte imprimée (10).

7. Méthode de fabrication d'un tableau de bord (1) pour véhicules automobiles, le tableau de bord (1) comprenant une carte imprimée (10) et au moins un élément électrique (20), l'élément électrique (20) étant fixé sur la carte imprimée (10), le tableau de bord (1) comprenant par ailleurs une boîte à lumière (15) et un élément protecteur (21) apte à protéger l'élément électrique (20), pendant une première étape, l'élément protecteur (21) et la boîte à lumière (15) étant formés en une seule pièce, et que pendant une deuxième étape, l'élément protecteur (21) est fixé sur la carte imprimée **caractérisée en ce qu'**entre l'élément protecteur et la boîte à lumière est prévu un élément de liaison oblongue et flexible.

## Patentansprüche

1. Instrumententafel (1) für Kraftfahrzeuge, mit einer Leiterplatte (10) und mindestens einem elektrischen Element (20), wobei das elektrische Element (20) auf der Leiterplatte (10) befestigt ist, wobei die Instrumententafel (1) darüber hinaus eine Leuchtbox (15) und ein Schutzelement (21) umfasst, welches zum Schützen des elektrischen Elements (20) in der Lage ist, wobei das Schutzelement (21) und die Leuchtbox (15) so bereitgestellt sind, dass sie ein einziges Teil bilden, **dadurch gekennzeichnet, dass** zwischen dem Schutzelement (21) und der Leuchtbox (15) ein längliches und flexibles Verbindungselement (23) bereitgestellt ist.

2. Instrumententafel (1) nach Anspruch 1, **dadurch gekennzeichnet, dass** eine zuvor festgelegte Bruchstelle zwischen dem Schutzelement (21) und der Leuchtbox (15) vorgesehen ist.

3. Instrumententafel (1) nach einem der vorangegangenen Ansprüche, **dadurch gekennzeichnet, dass** das Schutzelement (21) durch Clippen fest auf der Leiterplatte (10) befestigbar ist.

4. Instrumententafel (1) nach einem der vorangegangenen Ansprüche, **dadurch gekennzeichnet, dass** das elektrische Element (20) Folgendes ist
-- ein Motorelement, insbesondere ein Schrittmotor und/oder
-- ein Lautsprecher und/oder
-- ein Summer und/oder
-- ein Steckverbinder und/oder
-- eine Metallklemme.

5. Instrumententafel (1) nach einem der vorangegangenen Ansprüche, **dadurch gekennzeichnet, dass** das Schutzelement (21) um das elektrische Element (20) herum verläuft.

6. Instrumententafel (1) nach einem der vorangegangenen Ansprüche, **dadurch gekennzeichnet, dass** die Instrumententafel (1) eine Anzeigefläche auf einer Seite der Leiterplatte (10) aufweist, und dass das elektrische Element (20) auf der Leiterplatte (10) auf der anderen Seite der Leiterplatte (10) befestigt ist.

7. Verfahren zur Herstellung einer Instrumententafel (1) für Kraftfahrzeuge, wobei die Instrumententafel (1) eine Leiterplatte (10) und mindestens ein elektrisches Element (20) umfasst, wobei das elektrische Element (20) auf der Leiterplatte (10) befestigt ist, wobei die Instrumententafel (1) darüber hinaus eine Leuchtbox (15) und ein Schutzelement (21) umfasst, welches zum Schützen des elektrischen Elements (20) während eines ersten Schritts in der Lage ist, wobei das Schutzelement (21) und die Leuchtbox (15) einstückig ausgebildet sind, und wobei während eines zweiten Schritts das Schutzelement (21) fest auf der Leiterplatte befestigt ist, **dadurch gekennzeichnet, dass** ein längliches und flexibles Verbindungselement zwischen dem Schutzelement und der Leuchtbox bereitgestellt ist.

## Claims

1. Instrument panel (1) for motor vehicles, including a printed circuit board (10) and at least one electrical element (20), the electrical element (20) being attached on the printed circuit board (10), the instrument panel (1) including moreover a light box (15) and a protecting element (21) capable of protecting the electrical element (20), the protecting element (21) and the light box (15) being provided so as to form a single piece, **characterized in that**, between the protecting element (21) and the light box (15), an oblong and flexible connecting element (23) is provided.

2. Instrument panel (1) according to Claim 1, **characterized in that** a predetermined break point is provided between the protecting element (21) and the light box (15).

3. Instrument panel (1) according to any one of the preceding claims, **characterized in that** the protecting element (21) is suitable for being firmly attached by clipping on the printed circuit board (10).

4. Instrument panel (1) according to any one of the preceding claims, **characterized in that** the electrical element (20) is
-- a motor element, in particular a step motor, and/or
-- a loudspeaker, and/or
-- a buzzer and/or
-- a connector, and/or
-- a metal clamp.

5. Instrument panel (1) according to any one of the preceding claims, **characterized in that** the protecting element (21) goes around the electrical element (20).

6. Instrument panel (1) according to any one of the preceding claims, **characterized in that** the instrument panel (1) includes a display surface on one side of the printed circuit board (10) and **in that** the electrical element (20) is attached on the printed circuit board (10) on the other side of the printed circuit board (10).

7. Method for manufacturing an instrument panel (1) for motor vehicles, the instrument panel (1) including a printed circuit board (10) and at least one electrical element (20), the electrical element (20) being attached on the printed circuit board (10), the instrument panel (1) including moreover a light box (15) and a protecting element (21) capable of protecting the electrical element (20), during a first step, the protecting element (21) and the light box (15) being formed as a single piece, and in that, during a second step, the protecting element (21) is firmly attached on the printed circuit board, **characterized in that** an oblong and flexible connecting element is provided between the protecting element and the light box.
